# EUROPEAN PATENT APPLICATION

(11) **EP 1 854 698 A2**
(43) Date of publication of application: **14.11.2007**
(21) Application number: 07075329.8
(22) Date of filing: 02.05.2007
(51) Int. Cl.: B62D 1/16

(54) **Vehicle steering assembly having an axially compliant intermediate shaft**

(30) Priority: 08.05.2006 US 798632 P; 26.04.2007 US
(71) Applicant: Delphi Technologies, Inc., Troy, Michigan 48007 (US)
(72) Inventor: Scrimpsher, Kristina C., Saginaw, MI 48603 (US); Macias Perez, Rogelio Ivan, Juarez 32680 Chihuahua (MX); Daenzer, Troy, Reese, MI 48757 (US); Torres, Ernesto, Juarez 32140 Chihuahua (MX); Novotny, Gary A., Bay City, MI 48708 (US); Maynes, Andrew, El Paso, TX 79912 (US)
(74) Representative: Robert, Vincent

(57) **Abstract**

A steering assembly (60) has a yoke (92, 102) and an axially compliant intermediate shaft (82) having an elastomeric coupling (104) fitted concentrically to the yoke for rotation about an axis (88). Preferably, a rigid sleeve (108) of the shaft has a cylindrical portion (114) that fixes concentrically to an end portion (106) of a shaft element (86) that extends longitudinally along the axis. Two diametrically opposite tabs (122, 124) of the sleeve project radially outward from the cylindrical portion. A resiliently flexible isolator (110) is preferably molded to the sleeve and circumferentially covers the tabs and the cylindrical portion. The isolator preferably has two diametrically opposite ears (130, 132) located circumferentially between two diametrically opposite cover segments (126, 128) that substantially cover the tabs. The tabs generally prevent rotation of the shaft with respect to the yoke in case of isolator failure due to excessive torque. Each ear preferably has a lobe (136) that projects axially beyond the sleeve for enhancing axial compliancy of the intermediate shaft.

## Description

### FIELD OF THE INVENTION

The present invention relates to a vehicle steering assembly, and more particularly to a steering assembly of a vehicle having an axially compliant intermediate shaft.

### BACKGROUND OF THE INVENTION

Steering column assemblies of a motor vehicle typically include a steering column, a steering shaft rotatably supported on the steering column, a steering gear remote from the steering column having a steering assist fluid motor, and an intermediate steering shaft for transferring steering torque from the steering shaft to an input shaft of the steering gear. The intermediate steering shaft usually includes a tubular element, a solid element telescoped into the tubular element and rotatable as a unit therewith, a pair of universal couplings for connecting the tubular and solid elements to respective ones of the steering shaft and steering gear input shaft, and a relatively soft elastomeric isolator between one of the universal couplings and the corresponding one of the tubular and solid elements for interrupting the transfer of torsional vibrations from the steering gear to the steering shaft.

For some steering assembly applications, when the motor vehicle is driven, the elastomeric isolator twists back and forth and transfers steering torque between the steering shaft and the intermediate steering shaft. Although the steering assist fluid motor provides some of the effort necessary to steer the motor vehicle and thus reduces the torque applied to the isolator, some steering applications that apply an output torque from an electric motor ahead of the intermediate shaft to assist in the manual steering effort tend to increase the torque applied to the isolator. In such applications, the isolator is exposed to torques of about 100 Nm.

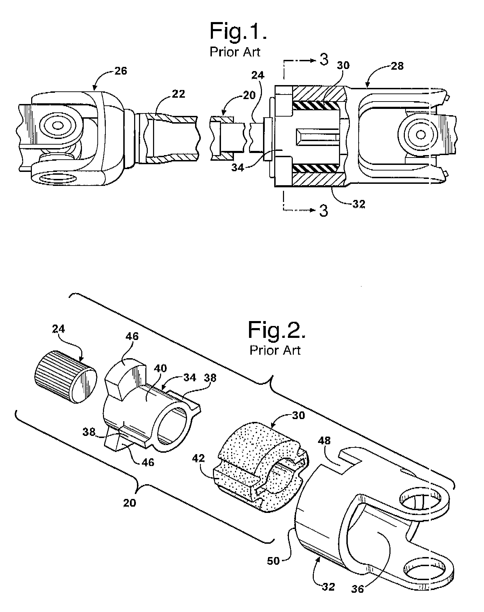

To prevent isolator failure when exposed to torques of about 100 Nm, the torsional stiffness of the isolator can be increased. However, such an increase would undesirably increase the torsional vibrations transmitted to the steering wheel. Another known option is taught in U.S. Patent 6,533,666, titled: Intermediate Steering Shaft for Motor Vehicle, assigned to the same assignee as the present invention, and incorporated herein by reference in its entirety. As best illustrated in Figures 1-3, a known intermediate shaft 20 includes a tubular shaft element 22, a solid shaft element 24 telescoped into the tubular shaft element 22 and rotatable as a unit therewith, a pair of universal couplings 26, 28 for connecting the respective tubular and solid shaft elements 22, 24 to respective ones of an input shaft of a steering gear and a steering shaft on a steering column. The intermediate shaft 20 also includes a torsional elastic or concentric isolator 30 orientated between the solid shaft element 24 and a yoke 32 of the coupling 28. The torsionally elastic isolator 30 is molded to a torsion sleeve 34 attached rigidly to the solid shaft element 24 and is fitted axially into a cavity 36 in the yoke 32.

Circumferential or rotational slippage between the sleeve 34 and the isolator 30 is prevented by two diametrically opposite tabs 38 of the sleeve 34 that project radially outward from a cylindrical portion 40 of the sleeve 34 engaged to the solid shaft element 24. The tabs 38 are substantially isolated from the yoke 32 by cover segments 42 of the isolator 30. The cover segments 42 are fitted into grooves 44 communicating radially inward with the cavity 36 in the yoke 32. Although the tabs 38 are located in the cavity 36 of the yoke 32, they are generally not located in the grooves 42.

In case of isolator 30 failure due to excessive torque, two diametrically opposite lugs 46 project radially outward from the cylindrical portion 40 of the sleeve 34. The lugs 46 are received in respective slots 48 is a distal crimp rim 50 of the yoke 32. In operation, if the isolator twists excessively, the lugs 46 will rotate and circumferentially abut the yoke 32 in the slots 48 preventing any further twisting of the isolator 30.

Unfortunately, known concentric isolators, including that taught in U.S. Patent 6,533,666, do not move axially thus do not disrupt axial vibrations. Moreover, the lugs 46 of the sleeve 34 may transmit undesired noise if the lugs axially contact the yoke 32 or if a leading edge of the cylindrical portion 40 contacts the yoke 32 inside the cavity 36. Yet further, because the lugs 46 extend through the rim 50 of the yoke 32, crimping of the circumferentially discontinuous rim 50 results in an uneven distribution of compression against the isolator 30 when fully assembled that may undesirably effect performance parameters.

### SUMMARY OF THE INVENTION

A steering assembly has a yoke and an axially compliant intermediate shaft having an elastomeric coupling fitted concentrically to the yoke for rotation about an axis. Preferably, a rigid sleeve of the shaft has a cylindrical portion that fixes concentrically to an end portion of a shaft element that extends longitudinally along the axis. Two diametrically opposite tabs of the sleeve project radially outward from the cylindrical portion. A resiliently flexible isolator is preferably molded to the sleeve and circumferentially covers the tabs and the cylindrical portion. The isolator preferably has two diametrically opposite ears located circumferentially between two diametrically opposite cover segments that substantially cover the tabs. The tabs generally prevent rotation of the shaft with respect to the yoke in case of isolator failure due to excessive torque. Each ear preferably has a lobe that projects axially beyond the sleeve for enhancing axial compliancy of the intermediate shaft.

Objects features and advantages of the present invention include an elastomeric coupling that is axially compliant in addition to the more traditional rotational compliancy. Further advantages include an integrated safety stop should the coupling fail due to severe torsional forces and a means of crimping an intermediate shaft to a universal joint in a uniform and consistent manner. Moreover, the versatile coupling is simple in design, inexpensive to manufacture, compact, capable of being easily integrated into known steering assemblies and in use has a long life.

### BREIF DESCRIPTION OF THE DRAWINGS

Advantages of the present invention will be readily appreciated as the same becomes better understood by reference to the following detailed description when considered in connection with the accompanying drawings wherein:
Figure 1 is a partial and segmented cross section of a steering assembly illustrating a known intermediate shaft of the assembly;
Figure 2 is an exploded perspective view of the known intermediate shaft of the steering assembly;
Figure 3 is a cross section of the intermediate shaft taken along line 3-3 of Figure 1;
Figure 4 is a partially exploded perspective view of a steering assembly embodying the present invention;
Figure 5 is an exploded perspective view of an intermediate shaft and yoke of the steering assembly embodying the present invention;
Figure 6 is a perspective view of the intermediate shaft;
Figure 7 is a cross section of the intermediate shaft and yoke illustrated in an uncrimped state and taken along line 7-7 of Figure 5;
Figure 8 is a cross section of the intermediate shaft and yoke taken along line 8-8 of Figure 7;
Figure 9 is a partial enlarged cross section of the intermediate shaft and yoke taken form circle 9 of Figure 7; and
Figure 10 is a perspective view of the yoke illustrated in a crimped state and with the intermediate shaft removed to show internal detail.

### DESCRIPTION OF THE PREFERRED EMBODIMENT

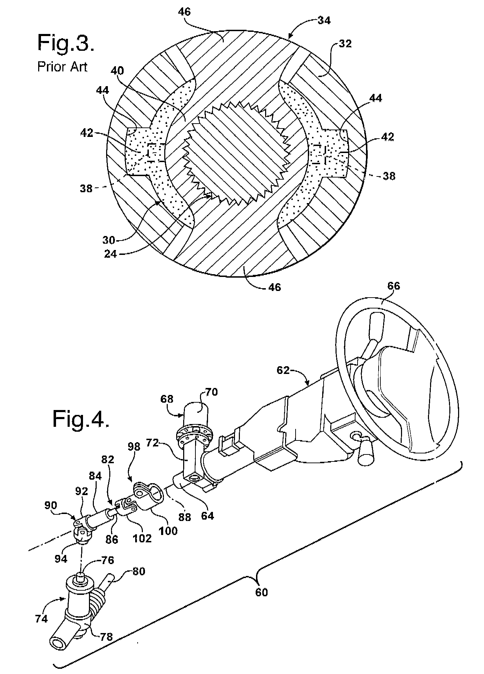

Referring to Figure 4, a steering assembly 60 embodying the present invention is supported on a body, not shown, of a motor vehicle and includes a mast jacket 62 and a steering shaft 64 rotatably supported on the mast jacket. A steering hand wheel 66 attaches rigidly to the steering shaft for rotation as a unit therewith. An electric power assist apparatus 68 on the mast jacket 62 includes an electric motor 70 and a speed reducer 72 operable to transfer torque from the electric motor to the steering shaft 64 to supplement manual effort applied at the steering hand wheel 66.

A steering gear 74 on the motor vehicle body, remote from the steering column includes an input shaft 76 rotatably supported on a housing 78 of the steering gear and a rack bar 80 supported on the housing for back and forth linear translation in response to rotation of the input shaft. Opposite ends, not shown, of the rack bar are linked to dirigible wheels of the motor vehicle for steering the motor vehicle in the usual fashion in response to rotation of the input shaft 76. An intermediate shaft 82 according to this invention spans the gap between the steering shaft 64 and the steering gear input shaft 76.

The intermediate shaft 82 includes a tubular shaft element 84 and a solid shaft element 86 telescoped into the tubular shaft element and coupled thereto by splines or the like for unitary rotatin about and for relative linear translation in the direction of a rotation axis 88 of the intermediate shaft. A lower universal coupling 90 of the steering assembly 60 includes an inner yoke 92 attached rigidly to the tubular shaft element 84, an outer yoke 94 clamped to the steering gear input shaft 76, and a cross or spider (not shown) between the yokes. An upper universal coupling 98 of the steering assembly 60 includes an outer yoke 100 clamped to the steering shaft 64, an inner yoke 102, and a cross or spider (not shown) between the yokes.

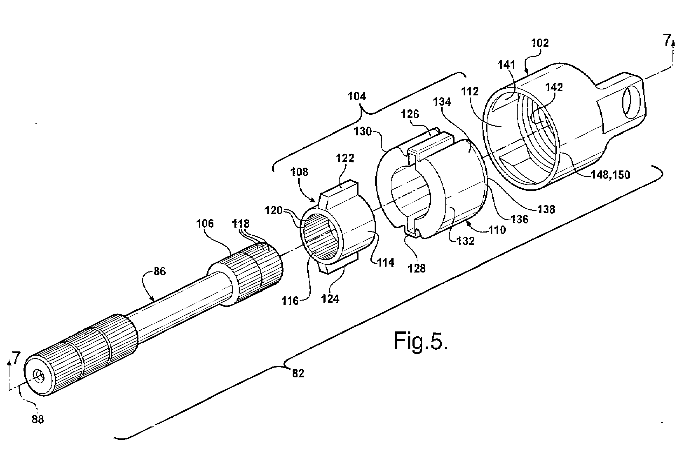

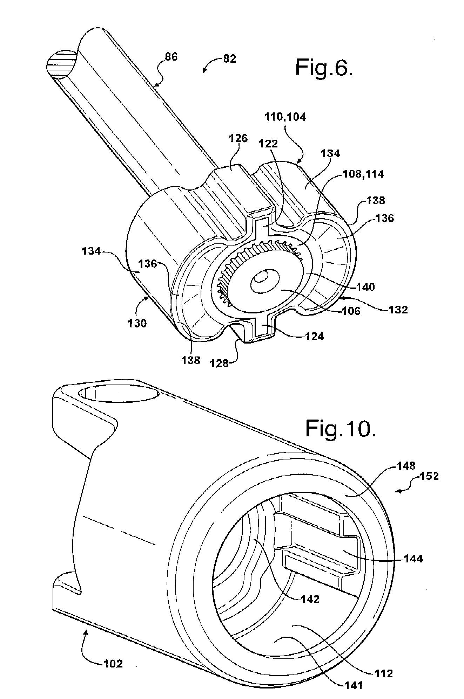

Referring to Figures 5-10, a torsionally elastic coupling 104 is interposed between the inner yoke 102 of the upper universal coupling 98 and a distal end portion 106 of the solid shaft element 86. The coupling 104 has a rigid sleeve 108 fixed rigidly to the end portion 106 of the shaft element 86 and a circumferentially continuous and flexible isolator 110 preferably molded circumferentially about the exterior of the sleeve 108 for a press fit axially into a cavity 112 in the yoke 102.

The sleeve 108 is preferably made of metal and/or a similar rigid material to that of the shaft element 86 having sufficient strength. A cylindrical portion 114 of the sleeve 108 defines a through-bore 116 in the sleeve for axial receipt of the end portion 106 of the shaft element 86. Both the end portion 106 and the cylindrical portion 114 respectively carry a plurality of mating splines 118, 120 that mate to one another for preventing rotation of the sleeve 108 with respect to the shaft element 86. Preferably, the cylindrical portion 114 of the sleeve 108 is fitted tightly enough to prevent any axial movement of the sleeve 108 with respect to the shaft element 86 and may also be crimped or adhered to further secure the rigid connection.

Two diametrically opposite tabs 122, 124 of the sleeve 108 project laterally outward from the cylindrical portion 114 and extend longitudinally in an axial direction with respect to rotation axis 88. Preferably, the elongated tabs 122, 124 are substantially parallel to axis 88 and extend substantially along the entire axial length of the cylindrical portion 114. The tabs 122, 124 generally serve dual functions; first, the tabs 122, 124 prevent rotation of the isolator 110 with respect to the sleeve 108, and second, the tabs 122, 124 act as rotational safety stops against the yoke 102 if the isolator 110 fails or shears due to excessive torque.

The isolator 110 continuously extends circumferentially about the sleeve 108 and has two diametrically opposite cover segments 126, 128 that substantially cover respective tabs 122, 124 of the sleeve 108 and two diametrically opposite ears 130, 132 spaced circumferentially between the tabs 122, 124. Each ear 130, 132 projects radially outward to a convex face 134 that faces radially outward and generally conforms to a partial cylindrical shape that is substantially concentric to axis 88. Preferably, both the cover segments 126, 128 and the convex faces 134 of the ears 130, 132 extend at least the entire axial length of the sleeve 108. Each ear 130, 132 has a lobe 136 that projects axially outward to an apex 138 contiguous to the respective faces 134 and thus extending partially circumferentially with respect to axis 88. Each apex 138 of the lobes 136 is spaced axially beyond a distal and circumferentially continuous edge 140 of the sleeve 108 for resiliently compressible and axial contact with the yoke 102.

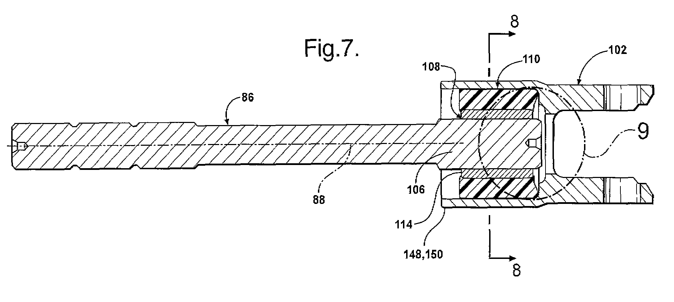

The inner yoke 102 of the universal coupling 98 has an inner surface 141 extending circumferentially about axis 88 and a bottom surface 142 disposed substantially perpendicular to axis 88 and contiguous to the inner surface 141. Both surfaces 141, 142 generally define the cavity 112. Two diametrically opposing grooves 144, 146 in the yoke 102 are defined by the inner surface 141 and communicate laterally or radially inward with the cavity 112. A trailing end of each groove 144, 146 is open for axial receipt of the respective cover segments 126, 128 and respective tabs 122, 124. The yoke 102 also has a distal and circumferentially continuous crimp ring 148 disposed concentrically to axis 88 and projecting axially away from bottom surface 142. The crimp ring 148 has an uncrimped state 150, as best shown in Figures 5 and 7, and a crimped state 152 as best shown in Figure 10.

During assembly of the steering assembly 60, the isolator 110 is preferably molded circumferentially about the sleeve 108. As a single unit, the resultant elastomeric coupling 104 is then slid axially over the end portion 106 of the shaft element 86 after rotationally aligning the mating splines 118, 120. Once the cylindrical portion 114 of the coupling 104 is fixed rigidly to the shaft element 86, the cover segments 126, 128 are then rotationally aligned to the grooves 144, 146 in the yoke 102 of the universal coupling 98. Once rotationally aligned, the isolator 110 of the elastomeric coupling 104 of the intermediate shaft 82 is then slid axially and press fitted into the cavity 112 of the yoke 102. This axial insertion continues until the apexes 138 of the lobes 136 of the respective ears 130, 132 generally contact the bottom surface 142 of the yoke 102 that defines in-part the cavity 112.

With the intermediate shaft 82 properly positioned in the yoke 102, the crimp ring 148 is plastically deformed from the cylindrical uncrimped state 150 (see Figure 5) to the crimped state 152 (see Figure 10). When crimped, the isolator 110 is slightly axially compressed inside the yoke 102. This compressive force is generally uniform circumferentially and thus has a consistent compressive displacement on the isolator 110 because it is a continuous ring that is crimped continuously along its circumference.

During operation of the steering assembly 60, the convex faces 134 of the ears 130, 132 generally remain in stationary contact with the inner surface 141 of the yoke 102. The radial thickness of the ears 130, 132 and corresponding shear strength and the thickness of the cover segments 126, 128 of the isolator 110 and corresponding compressibility enable absorption of rotational or torque induced vibration. The axial projection of the lobes 136, the tapering down effect to the distal apexes 138 of the lobes 136, and the axial clearance between any portion of the rigid sleeve 108 and the rigid yoke 102 provides and assures absorption capability of axially induced vibrations.

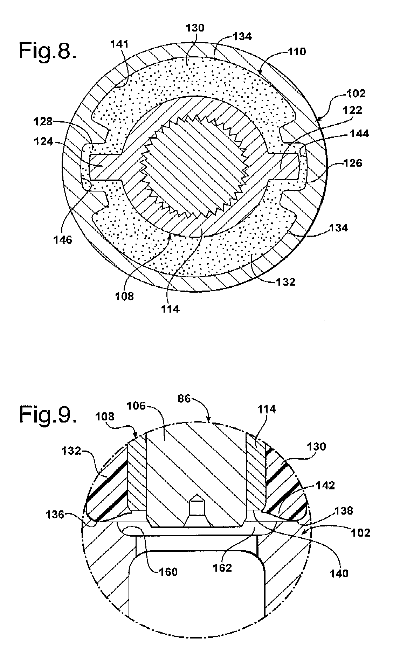

Rotational movement of the yoke 102 is transmitted to the shaft element 86 through the exterior driving faces 134 of the isolator 110. Moreover, the grooves 144, 146 in the yoke 14 generally engage the cover segments 126, 128 of the isolator 110 to transmit rotational movement of the yoke 102 to the shaft element 86. In addition to transmitting rotational movement of the yoke 102, the isolator 110 disrupts noise and vibration between the shaft element 86 and the yoke 102. The elastomeric isolator 110 is of a sufficient elasticity and thickness to adequately isolate noise and vibration by operating in compression. Further, as best shown in Figure 9, the bottom surface 142 of the yoke 102 includes a stepped portion 160 that further defines an axial gap 162 between the sleeve 108 and the yoke 102. The combination of the gap 162 and the thickness of the ears 130, 132 allows the shaft element 86 to move axially into and out of the gap 162 relative to the yoke 102 to isolate axial vibration and reduce the likelihood of transmitting vibration into the yoke 102. In essence, the isolator 110 is also capable of operating in shear such that the shaft element 86 can move axially relative to the yoke 102.

Known intermediate shafts typically utilize isolators, unlike the present invention, made of santoprene and having an axial compliance of about 600 to 800 Newtons per millimeter which is generally insufficient for absorbing axial vibrations. Changing to a softer or more flexible material such as neoprene is desirable, however, such use would cause known isolators to fail or shear upon application of typical torsional forces. U.S. Patent 6,533,666, previously cited, utilizes neoprene and resolves the failure concerns when torque is applied by introducing the lugs 46 as part of the rigid sleeve 34. Unfortunately, the lugs along with additional factors eliminate or substantially reduce the ability of the isolator 30 to absorb axial vibration.

The intermediate shaft 82 of the present invention can absorb axial vibration and has an axial compliance within the range of 70 to 300 Newtons per millimeter. In comparison, the axial compliance of the intermediate shaft disclosed in U.S. Patent 6,533,666 is about 400 to 500 Newtons per millimeter. This improvement in axial compliance is achieved by the structural differences of the intermediate shaft while maintaining a connecting yoke of substantially the same size.

Referring to Figure 3 (prior art) and Figure 8 of the present invention, tabs 122, 124 have considerably greater girth than tabs 38 and project radially further out than tabs 42 so that they project substantially and squarely into respective grooves 44 in order to provide an emergency stop should the desired neoprene isolator 110 fail or shear due to over torquing. For similar reasons, the tabs 122, 124 of sleeve 108 project the entire axial length of the cylindrical or tubular portion 114 of the sleeve 108, whereas the tabs 38 of the prior art do not.

While the forms of the invention herein disclosed constitute presently preferred embodiments, many others are possible. For instance, the sleeve 108 may be a unitary part of the shaft element 86 (i.e. manufactured as one unitary piece). It is not intended herein to mention all the possible equivalent forms or ramification of the invention. It is understood that terms used herein are merely descriptive, rather than limiting, and that various changes may be made without departing from the spirit or scope of the invention.

## Claims

1. A steering assembly (60) for a vehicle comprising:
a shaft element (86) extending along a rotation axis (88) and having an end portion (106);
a sleeve (108) having a cylindrical portion (114) attached rigidly to said end portion and at least one axially extending tab (122) projecting laterally outward from said cylindrical portion;
an elastomeric isolator (110) circumferentially extending continuously around the torsion sleeve, said isolator having at least one cover segment (126) disposed between said at least one tab and said yoke and at least one ear (130) projecting radially outward from said sleeve and spaced circumferentially from said at least one tab;
a yoke (102) having a circumferential inner surface (141) and a contiguous bottom surface (142) defining a cavity (112) and at least one axially extending groove (144) opened radially inward for communication with said cavity; and
wherein said at least one cover segment is fitted against said inner surface in each respective one of said groove and said at least one tab projects substantially in each respective one of said groove for torsional strength between said shaft element and said yoke.

2. The steering assembly set forth in claim 1 wherein an axial length of said cylindrical portion is substantially equal to an axial length of each one of said at least one tab.

3. The steering assembly set forth in claim 1 further comprising:
a first and a diametrically opposite second tab (122, 124) of said at least one tab; and
a first and a diametrically opposite second ear (130, 132) of said at least one ear.

4. The steering assembly set forth in claim 1 further comprising:
said sleeve having an axially facing circumferential edge (140); and
said at least one ear having a lobe (136) projecting axially beyond said circumferential edge.

5. The steering assembly set forth in claim 4 wherein said lobe is in resilient axial contact with said yoke in said cavity.

6. The steering assembly set forth in claim 5 further comprising:
said yoke having a distal crimp ring (148) projecting axially and in a direction opposite to said lobe; and
wherein said crimp ring is in axial contact with said isolator when in a crimped stated (152).

7. The steering assembly set forth in claim 6 wherein said isolator is slightly axially compressed by said yoke and in said cavity while maintaining axial compliancy between said shaft element and said yoke.

8. The steering assembly set forth in claim 4 wherein said circumferential edge and said end portion are axially spaced from said bottom surface for maintaining axial compliancy between said shaft element and said yoke.

9. The steering assembly set forth in claim 1 wherein said isolator is made of neoprene.

10. The steering assembly set forth in claim 1 wherein said isolator is molded to said sleeve.

11. The steering assembly set forth in claim 7 wherein said axial compliancy is between the range of about seventy to three hundred Newtons per millimeter.

12. An intermediate shaft (82) for a steering assembly (60) of a vehicle, the shaft comprising:
a shaft element (86) extending along a rotation axis (88) having an end portion (106);
a resilient isolator (110) fixed to said end portion (106), said isolator having a first ear (130) and a diametrically opposite second ear (132) projecting radially outward; and
said first and second ears each having a distal convex face (134) extending partially circumferentially and a lobe (136) projecting axially beyond said end portion.

13. The intermediate shaft set forth in claim 12 wherein each face is arcuate circumferentially with respect to said axis and is carried in-part by said lobe.

14. The intermediate shaft set forth in claim 13 wherein said isolator has a first segment (126) and a diametrically opposite second segment (128) each extending axially and laterally projecting radially outward.

15. The intermediate shaft set forth in claim 14 wherein said first and second segments are spaced circumferentially between said first and second ears.

16. The intermediate shaft set forth in claim 15 further comprising a rigid first tab (122) and a diametrically opposite and rigid second tab (124) projecting radially outward from said end portion and being at least partially covered by said respective first and second segments.

17. The intermediate shaft set forth in claim 16 further comprising a non-flexible sleeve (108) having a cylindrical portion (114) fixed rigidly and disposed concentrically to said end portion and said first and second tabs projecting radially outward from said cylindrical portion and longitudinally extending parallel to said rotation axis.

18. The intermediate shaft set forth in claim 17 further comprising a plurality of mating splines (118, 120) carried between said end portion and said cylindrical portion for mating said sleeve to said end portion from an axial direction and preventing said sleeve from rotating with respect to said shaft element.

19. The intermediate shaft set forth in claim 17 wherein said cylindrical portion has a circumferential edge (140) facing axially outward, and wherein said lobe projects axially beyond said circumferential edge for maintaining an axial gap (162) between said edge and said yoke.

20. An elastomeric coupling (104) of an intermediate shaft (82) of a steering assembly (60) for a vehicle, the elastomeric coupling comprising:
a sleeve (108) having a cylindrical portion (114) disposed concentrically to an axis (88) and at least one axially extending tab (122) projecting laterally outward from said cylindrical portion;
said sleeve having a circumferentially continuous and distal edge (140) facing axially forward with said at least one tab projecting axially rearward from said distal edge;
an elastomeric isolator (110) circumferentially extending continuously around the torsion sleeve, said isolator having at least one cover segment (126) disposed over said at least one tab, and at least one ear (130) projecting radially outward from said sleeve and spaced circumferentially from said at least one tab; and
said at least one ear having a lobe (136) projecting axially forward and beyond said distal edge.
